(19) Europäisches Patentamt
European Patent Office
Office européen des brevets

(11) Veröffentlichungsnummer: **0 414 199 B1**

# (12) EUROPÄISCHE PATENTSCHRIFT

(45) Veröffentlichungstag der Patentschrift: **07.06.95**

(51) Int. Cl.6: **C08G 59/50**, C09D 5/44

(21) Anmeldenummer: **90115953.3**

(22) Anmeldetag: **21.08.90**

## (54) Verfahren zur Herstellung von Bindemitteln für kathodisch abscheibare Lacke und deren Verwendung.

(30) Priorität: **23.08.89 AT 1992/89**
**09.07.90 AT 1454/90**

(43) Veröffentlichungstag der Anmeldung:
**27.02.91 Patentblatt 91/09**

(45) Bekanntmachung des Hinweises auf die Patenterteilung:
**07.06.95 Patentblatt 95/23**

(84) Benannte Vertragsstaaten:
**BE DE ES FR GB IT NL SE**

(56) Entgegenhaltungen:
**EP-A- 0 030 692**
**EP-A- 0 193 102**
**EP-A- 0 319 834**
**US-A- 4 698 141**

**CHEMICAL ABSTRACTS, vol. 76, no. 24, 12. Juni 1972, Columbus, Ohio,US; abstract no. 141696, NIKLES, OTHO: 'Curing agents for emulsifying epoxyresins' Seite 30 ;Spalte 2 ; & ZA-7007138 (RESYN CORP.)**

(73) Patentinhaber: **Vianova Kunstharz Aktiengesellschaft**
**Bundesstrasse 175**
**A-8402 Werndorf (AT)**

(72) Erfinder: **Paar, Willibald, Dr. Chem.**
**Schanzelgasse 19**
**A-8010 Graz (AT)**
Erfinder: **Pampouchidis, Georg, Dr. Chem.**
**Obere Teichstrasse 31**
**A-8010 Graz (AT)**
Erfinder: **Hönig, Helmut, Dr. Phys.**
**Seebachergasse 10**
**A-8010 Graz (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 414 199 B1

## Beschreibung

Die Erfindung betrifft ein Verfahren zur Herstellung von Bindemitteln für kathodisch abscheidbare Elektrotauchlacke, welche zur Verbesserung der Abscheidungscharakteristik, der Badstabilität und der Filmeigenschaften Umsetzungsprodukte von polyethermodifizierten Diaminen mit Epoxidharzen enthalten. Die erfindungsgemäß hergestellten Bindemittel sind insbesonders zur Formulierung von Elektrotauchlacken, mit welchen auch unter normalen Abscheidungsbedingungen Filme mit höherer Schichtstärke erreicht werden können, geeignet.

Für eine solche Erhöhung der Schichtstärken bei der Elektrotauchlackierung von als Kathode geschalteten Werkstücken besteht ein großes Interesse, insbesondere seitens der Automobilindustrie, da man erwartet, bei Vorliegen geeigneter Materialien auf die bisher zwischen Grundierung und Decklackierung aufgebrachten Füllerschichten verzichten zu können.

Mit den vorhandenen Materialien lassen sich die diesbezüglichen Forderungen der Verbraucher nur in unzureichendem Maße realisieren, da die von der Anlagentechnik gegebenen Möglichkeiten für eine Erhöhung der Schichtstärken nicht zum gewünschten Ergebnis führen. Eine willkürliche Erhöhung der Abscheidungsspannung führt zu Oberflächenstörungen durch sogenannte Durchbrüche, d.h. durch elektrolytische Effekte beim Überschreiten der für das Bindemittel maximal zulässigen Arbeitsspannung. Eine Verlängerung der Beschichtungszeit ist meist aus Gründen des Arbeitsablaufes im Fließbandbetrieb nicht möglich. Diese Methode ist auch deswegen nicht zielführend, da bekanntlich bei der Elektrobeschichtung durch den Aufbau eines Filmwiderstandes eine automatische Begrenzung der Filmstärke eintritt.

Man hat daher versucht, durch Zusätze zum Elektrotauchlack die Schichtstärke zu beeinflussen. Bis zu einem bestimmten Ausmaß ist dies durch Kombination der Bindemittel mit höhermolekularen wasserunlöslichen Komponenten möglich, doch werden damit die für die kathodische Abscheidung charakteristischen niedrigen Schichtstärken von 8 bis 14 $\mu$m ohne Verschlechterung der Filmeigenschaften nur auf die bereits als Standard erwünschten 18 bis 22 $\mu$m erhöht. Solche Bindemittelkombinationen werden beispielsweise in der EP-B1-00 28 402 beschrieben. Dieser Effekt kann auch durch andere, unter den Bedingungen des K-ETL-Verfahrens praktisch wasserunlösliche Zumischkomponenten, z.B. auf Basis von Oxazolidinverbindungen, erzielt werden, wie es in der AT-PS 377.775 beschrieben wird. Eine Lösung für das anstehende Problem ist auch dadurch nicht gegeben.

In der EP-A1-00 59 468 werden Zusätze zur Erhöhung der Schichtstärken auf Basis von quartären Ammoniumsalzen,z.B.Methyldodecylbenzyltrimethylammoniumchlorid,Methyldodecylxylylen-bis-trimethylammoniumacetat u.ä. beschrieben. Die Wirkung der Zusätze liegt im wesentlichen in einer Erhöhung der Filmleitfähigkeit (oder einer Herabsetzung des Filmwiderstandes). Da jede Änderung des Filmwiderstandes Einfluß auf den Umgriff, d.h. auf die Beschichtung elektrisch abgeschirmter Stellen des Werkstücks hat, bedarf ein Zusatz dieser Art einer besonders sorgfältigen Badüberwachung.

Eine weitere Methode zur Anhebung der erzielbaren Filmstärken besteht in der Zugabe von schwerflüchtigen, wasserunlöslichen, organischen Lösungsmitteln, beispielsweise dem Ethylenglykolmonohexylether. Durch diese Zusätze wird der Dispersionscharakter des Badmaterials verändert, wodurch ebenfalls der Filmwiderstand beeinflußt wird. Bei der großen Oberfläche der Elektrotauchlackierbecken ist jedoch ein Verdampfen dieser Zusätze trotz deren hohen Siedepunkten nicht zu vermeiden, wodurch Schwankungen bei der Beschichtung ohne besonderen Kontrollaufwand kaum vermieden werden können. Überdies werden durch Zusätze dieser Art die Stabilität der Badmaterialien negativ beeinflußt und die optimale Abscheidungsspannung herabgesetzt.

In der EP 0 070 550 werden Umsetzungsprodukte von Polyepoxidverbindungen mit Polyoxyalkylenpolyaminen zur Erzielung von kathodisch applizierbaren Filmen mit erhöhter Kratersicherheit beschrieben. Diese Produkte sind jedoch aufgrund der Polyfunktionalität der eingesetzten Rohstoffe nicht reproduzierbar herzustellen und neigen bei der Synthese zum Gelieren.

Die EP 0 193 685 beschreibt Additive für kationische Elektrotauchlacke auf Basis von Umsetzungsprodukten von Polyoxyalkylenpolyaminen mit Monoepoxiden. Diese Zusatzkomponenten führen jedoch aufgrund ihres sehr starken hydrophilen Charakters bei der Schwitzwasser- bzw. Salznebelbelastung zur Enthaftung des eingebrannten Filmes auch nicht vorbehandeltem Stahlblech.

Es wurde nun gefunden, daß mit kathodisch abscheidbaren Lacken, die als Bindemittel Polyepoxidharze enthalten, die anteilig mit den anspruchsgemäßen disekundären Diaminen modifiziert sind, die gewünschte Schichtstärkensteigerung erreicht werden kann, ohne daß die beschriebenen Nachteile auftreten. Die erfindungsgemäß eingesetzten Modifikatoren werden durch Umsetzung von Polypropylenglykoldiglycidylverbindungen oder Polypropylenglykoldiacrylaten mit primären Alkylmonoaminen, deren Alkylrest gegebenenfalls eine oder zwei Hydroxylgruppe(n) oder eine tertiäre Aminogruppe aufweist, erhalten.

Die vorliegende Erfindung betrifft demgemäß ein Verfahren zur Herstellung von nach vollständiger oder teilweiser Neutralisation mit anorganischen und/oder organischen Säuren wasserverdünnbaren Bindemitteln auf der Basis von aminmodifizierten Epoxidharzen, welches dadurch gekennzeichnet ist, daß man 5 bis 60 Mol%, vorzugsweise 10 bis 35 Mol%, der Epoxidgruppen einer harzartigen Verbindung mit mindestens zwei 1,2-Epoxidgruppen pro Molekül mit einem disekundären Diamin der allgemeinen Formel

(I)

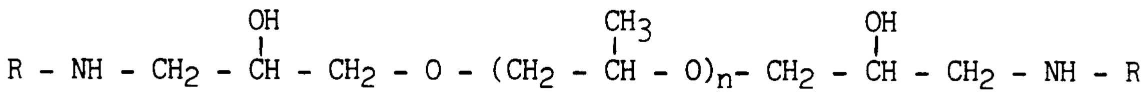

und/oder

(II)

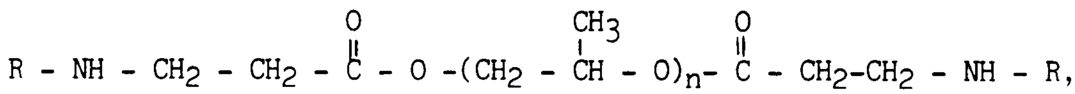

wobei R eine Alkylgruppe von 4 bis 18 C-Atomen oder eine Monohydroxyalkylgruppe oder eine Dihydroxyalkylgruppe oder eine tert.- Aminoalkylgruppe bedeutet und n für eine Zahl zwischen 2 und 12 steht, und den Rest der Epoxidgruppen in bekannter Weise mit Aminen und/oder Carbonsäuren und/oder substituierten Phenolen bei 60 bis 120 °C vollständig umsetzt, wobei die Menge der basischen Komponenten so gewählt wird, daß das Endprodukt eine theoretische Aminzahl von mindestens 30 mg KOH/g, vorzugsweise von 50 bis 110 mg KOH/g, aufweist.

Die Erfindung betrifft weiters die Verwendung der erfindungsgemäß hergestellten Bindemittel zur Formulierung von Elektrotauchlacken, mit welchen auch unter normalen Abscheidungsbedingungen Filme mit höherer Schichtstärke erreicht werden können.

Durch das erfindungsgemäße Verfahren können in einfacher und übersichtlicher Weise Produkte erhalten werden, die sowohl als Bindemittel in Kombination mit Härtungskomponenten oder als Alleinbindemittel bei entsprechender Modifizierung mit härtbaren Gruppen, wie halbblockierten Diisocyanaten, aber auch, aufgrund ihrer guten Pigmentbenetzung, zur Herstellung von Pigmentpasten für eine spätere Abmischung mit anderen kathodisch abscheidbaren Elektrotauchlackbindemitteln eingesetzt werden können.

Als harzartige Verbindungen mit mindestens zwei 1,2-Epoxidgruppen, welche erfindungsgemäß mit den disekundären Diaminen umgesetzt werden, kommen insbesonders die bekannten Epoxidharze, welche durch Umsetzung von Bisphenolen, Novolaken, Glykolen etc. mit Epichlorhydrin oder Methylepichlorhydrin erhalten werden, zum Einsatz. Diese Produkte sind im Handel in einer breiten Palette zugänglich und in vielen Lehrbüchern ausführlich beschrieben. Besonders bevorzugt werden die Produkte auf Basis von Bisphenol A oder Novolaken, welche ein Epoxidäquivalentgewicht zwischen 170 und 1000 aufweisen.

Die erfindungsgemäß eingesetzten disekundären Diamine der allgemeinen Formel (I) werden durch Umsetzung von 1 Mol eines Polypropylenglykoldiglycidylethers mit einem Molekulargewicht zwischen 200 und 800 mit 2 Mol einer eine primäre Aminogruppe aufweisenden Verbindung erhalten.

Amine der allgemeinen Formel (II) erhält man durch Umsetzung von 1 Mol eines Di- oder Polypropylenglykoldiacrylats mit 2 Mol einer eine primäre Aminogruppe aufweisenden Verbindung.

Die für die Synthese der Verbindungen (I) und (II) verwendeten Amine sind primäre Monoalkylamine, wie Butylamin und seine Homologe, primäre Alkanolmonoamine, wie Monoethanolamin und seine Homologe, oder Dihydroxyalkylamine vom Typ des 2-Aminoethylpropandiol, oder primär-tertiäre Alkyldiamine, wie 3-Dimethylamino-1-propylamin und dessen homologe Verbindungen.

Die Herstellung der erfindungsgemäß eingesetzten disekundären Diamine der Gruppe (I) erfolgt durch Vorlegen des primären Amins und langsame Zugabe der Diepoxidverbindung bei 40 - 80 °C. Die Reaktionsmasse wird anschließend bei ca. 80 °C bis zum vollständigen Verbrauch aller Epoxidgruppen gehalten; eventuell nicht umgesetztes Amin wird im Vakuum abdestilliert.

Die für die Herstellung der disekundären Diamine der Gruppe (I) benötigten Polypropylenglykoldiglycidylether enthalten vielfach beträchtliche Mengen an hydrolysierbarem Chlor, das in den Elektrotauchanlagen zu verstärkter Anlagenkorrosion führen kann.

In einer speziellen Ausführungsform werden daher die disekundären Diamine der Gruppe (I) zur Verringerung des Gehalts an hydrolysierbarem Chlor sofort nach ihrer Herstellung einem Waschprozeß unterworfen.

Bei 60 bis 80 °C wird unter starkem Rühren Wasser in einer Menge von 20 bis 40 % des ursprünglichen Volumens des Reaktionsansatzes zugesetzt. Es wird bei 70 bis 80 °C eine weitere Stunde gerührt und anschließend ein Schleppmittel, vorzugsweise Xylol, zugegeben. Die Mischung wird ohne Rühren bis zur vollständigen Phasentrennung stehengelassen. Die wäßrige Phase wird abgetrennt, das noch im Ansatz befindliche Wasser wird azeotrop abdestilliert und das Kreislaufmittel wird schließlich im Vakuum entfernt.

Die disekundären Diamine der Gruppe (II) werden durch langsame Zugabe der Diacrylatverbindung zum vorgelegten Amin bei 30 - 35 °C unter Kühlung erhalten. Zur Vervollständigung der Reaktion wird der Ansatz anschließend noch 3 Stunden bei 40 °C gehalten.

Gegebenenfalls werden die Produkte in einem Lösungsmittel gelöst. Geeignete Lösungsmittel sind Glykolmono- oder Glykoldiether; vorzugsweise wird das Methoxy- bzw. Ethoxypropanol eingesetzt.

Die Herstellung der Bindemittel erfolgt durch Umsetzung der Komponenten bei 60 - 120 °C, bis keine freien Epoxidgruppen mehr nachweisbar sind.

Die für die Reaktion mit den freigebliebenen Epoxidgruppen der Epoxidharze eingesetzten übrigen Amine, Carbonsäuren oder substituierten Phenole, in den Beispielen "Restmodifikatoren" genannt, sind dem Fachmann in großer Zahl bekannt und bedürfen keiner näheren Erläuterung.

Die nachfolgenden Beispiele sollen die Erfindung erläutern. Alle Angaben in Teilen oder Prozenten beziehen sich, soferne nicht anders angegeben, auf Gewichtseinheiten. Alle Angaben in den Tabellen beziehen sich auf Feststoffe.

In den Beispielen werden folgende Abkürzungen verwendet:

| | |
|---|---|
| DE 1 | Polypropylenglykoldiglycidylether mit einem Epoxidäquivalent von 200 |
| DE 2 | Polypropylenglykoldiglycidylether mit einem Epoxidäquivalent von ca. 320 |
| EHA | 2-Ethylhexylamin |
| MIPA | Monoisopropanolamin |
| AEPD | 2-Amino-2-ethylpropandiol-1,3 |
| DEAPA | 3-Diethylamino-1-propylamin |
| DEHA | Di-2-Ethylhexylamin |
| DPGDA | Dipropylenglykoldiacrylat |
| TPGDA | Tripropylenglykoldiacrylat |
| EPH I | Epoxidharz auf Basis Bisphenol A Epoxidäquivalent ca. 200 |
| EPH II | Epoxidharz auf Basis Bisphenol A Epoxidäquivalent ca. 500 |
| MP | Methoxypropanol |
| EP | Ethoxypropanol |
| INS | Isononansäure |
| NPH | Nonylphenol |
| SPH | Umsetzungsprodukt eines Mols Phenol mit 2 Mol DEAPA und 2 Mol Formaldehyd sowie mit 2 Mol eines mit 2-Ethylhexanol halbblockierten TDI (MG = 986); die Herstellung dieses Produktes ist beispielsweise in der AT-PS 382 160 beschrieben. |
| TDI | Toluylendiisocyanat (handelsübliches Isomerengemisch mit 80 % 2,4 TDI) |
| H 1 | Umsetzungsprodukt eines Mols Trimethylolpropan mit 3 Mol eines mit MP halbblockierten TDI (Urethanvernetzer) |
| H 2 | Umesterungshärter analog Beispiel 2 der AT-PS 372.099 (Umesterungsprodukt aus 3 Mol Malonsäuredimethylester und 1 Mol Trimethylolpropan) |
| | (H 1 und H 2 werden eingesetzt, soferne die Bindemittel keine selbstvernetzenden Eigenschaften aufweisen.) |
| Sn | Zinn-Katalysator (Dibutylzinndilaurat), berechnet als Metall |
| Pb | Blei-Katalysator (Bleioktoat), berechnet als Metall |

In Tabelle 1 sind die Ausgangsmaterialien für die in den Beispielen erfindungsgemäß eingesetzten disekundären Diamine (DISA) zusammengefaßt.

Bei der Herstellung von DISA 1 - 4 wird das primäre Amin in einem geeigneten Reaktionsgefäß vorgelegt und die Epoxidverbindung bei ansteigender Temperatur bei 40 - 80 °C langsam zugegeben. Die Temperatur wird weiter bei 80 °C gehalten, bis die Epoxidgruppen vollständig umgesetzt sind. Anschließend werden unter Vakuum Reste von nicht umgesetztem Amin aus dem Ansatz entfernt.

Im folgenden Waschprozeß zur Verringerung des Gehalts an hydrolysierbarem Chlor wird bei 60 bis 80 °C unter starkem Rühren Wasser in einer Menge von 20 bis 40 % des ursprünglichen Volumens des Reaktionsansatzes zugesetzt. Es wird bei 70 bis 80 °C eine weitere Stunde gerührt und anschließend ein

Schleppmittel, vorzugsweise Xylol, zugegeben. Die Mischung wird ohne Rühren bis zur vollständigen Phasentrennung stehengelassen. Die wäßrige Phase wird abgetrennt, das noch im Ansatz befindliche Wasser wird azeotrop abdestilliert und das Kreislaufmittel wird schließlich im Vakuum entfernt. In der Tabelle 1a sind die Angaben für den Gehalt an hydrolysierbarem Chlor in DISA 1 - 4 vor und nach dem Waschprozeß gegenübergestellt.

Bei DISA 5 und 6 erfolgt die langsame Zugabe der Diacrylat- verbindung unter Kühlung bei 30 - 35 °C. Anschließend wird der Ansatz 3 Stunden bei 40 °C gehalten.

Tabelle 1

| | Diglycidylverbindung | | Diacrylat | | primäres Amin | | FKP[1] | MG[2] |
|---|---|---|---|---|---|---|---|---|
| | Menge | Art | Menge | Art | Menge | Art | | |
| DISA 1 | 400 | DE 1 | | | 258 | EHA | 100 | 658 |
| DISA 2 | 640 | DE 2 | | | 146 | MIPA | 80 MP | 786 |
| DISA 3 | 640 | DE 2 | | | 238 | AEPD | 90 EP | 878 |
| DISA 4 | 400 | DE 1 | | | 260 | DEAPA | 80 EP | 660 |
| DISA 5 | | | 304 | TPGDA | 258 | EHA | 100 | 358 |
| DISA 6 | | | 246 | DPGDA | 238 | AEPD | 100 | 338 |

(1) Festkörpergehalt %, Lösungsmittel
(2) Molekulargewicht (berechnet)

Tabelle 1a

| | ppm hydrolysierbares Chlor | |
|---|---|---|
| | vor dem Waschprozeß | nach dem Waschprozeß |
| DISA 1 | ca. 8000 | ca. 2500 |
| DISA 2 | ca. 4500 | ca. 1900 |
| DISA 3 | ca. 4000 | ca. 1200 |
| DISA 4 | ca. 8000 | ca. 900 |

Tabelle 2 faßt den Aufbau der erfindungsgemäß hergestellten Bindemittel zusammen.

In einem geeigneten Reaktionsgefäß werden alle Komponenten bei 60 °C gemischt. Die Temperatur wird langsam auf 80 °C gesteigert und so lange gehalten, bis keine freien Epoxidgruppen mehr nachweisbar sind.

Die gemäß Tabelle 2 hergestellten Bindemittel werden in den in Tabelle 3 angegebenen Gewichtsverhältnissen mit dem Vernetzungsmittel und dem Katalysator gemischt. Die Menge des Neutralisationsmittels für die Herstellung eines stabilen wäßrigen Klarlackes (in Millimol Ameisensäure / 100 g Festharz) ist in der letzten Spalte angegeben.

Für die Herstellung pigmentierter Lacke werden die Bindemittelkombinationen 1 - 10 nach folgender Rezeptur verarbeitet:

100 Tle Festharz
0,5 Tle Farbruß
3,3 Tle basisches Bleisilikatpigment
35,5 Tle Titandioxid
5 Tle Monoethylenglykolmonohexylether

Die Prüfung der pigmentierten Lacke erfolgt durch elektrische Abscheidung auf nicht phosphatiertes, entfettetes Stahlblech, das als Kathode geschaltet wird. Anschließend werden die Filme bei 180 °C 25 Minuten eingebrannt und 360 Stunden auf ihre Beständigkeit im Salzsprühtest nach ASTM getestet.

Tabelle 4 faßt die jeweiligen Daten zusammen. Als Vergleichsbeispiel wurde ein kathodisch abscheidbarer ET-Lack gemäß Beispiel 1 der EP 0 93 685 herangezogen (V).

**Tabelle 2**

| Beispiel | Epoxidharz | | | DISA | | | Restmodifikator | | | MG(1) | AZ(2) |
|---|---|---|---|---|---|---|---|---|---|---|---|
| | Menge | (val) | Art | Menge | (val) | Art | Menge | (val) | Art | | |
| 1 | 200 | (1,0) | EPH I | 263 | (0,6) | DISA 3 | 2366 | (2,4) | SPH | 3829 | 79 |
| | 1000 | (2,0) | EPH II | | | | | | | | |
| 2 | 1500 | (3,0) | EPH II | 393 | (1,0) | DISA 2 | 65 | (1,0) | DEAPA | 2197 | 76 |
| | | | | | | | 239 | (1,0) | DEHA | | |
| 3 | 800 | (4,0) | EPH I | 254 | (1,5) | DISA 6 | 98 | (1,5) | DEAPA | 1372 | 122 |
| | | | | | | | 220 | (1,0) | NPH | | |
| 4 | 400 | (2,0) | EPH I | 660 | (2,0) | DISA 4 | 336 | (2,0) | INS | 2396 | 93 |
| | 1000 | (2,0) | EPH II | | | | | | | | |
| 5 | 2000 | (4,0) | EPH II | 494 | (1,5) | DISA 1 | 2465 | (2,5) | SPH | 4959 | 73 |
| 6 | 400 | (2,0) | EPH I | 329 | (1,0) | DISA 1 | 26 | (0,7) | MIPA | 1408 | 105 |
| | 500 | (1,0) | EPH II | 107 | (0,6) | DISA 5 | 46 | (0,7) | DEAPA | | |
| 7 | 200 | (1,0) | EPH I | 592 | (1,8) | DISA 1 | 52 | (0,8) | DEAPA | 1911 | 76 |
| | 1000 | (2,0) | EPH II | | | | 67 | (0,4) | INS | | |
| 8 | 800 | (4,0) | EPH I | 143 | (0,8) | DISA 5 | 119 | (2,0) | AEPD | 1140 | 147 |
| | | | | | | | 78 | (1,2) | DEAPA | | |
| 9 | 2000 | (4,0) | EPH II | 660 | (2,0) | DISA 4 | 440 | (2,0) | NPH | 3100 | 72 |
| 10 | 400 | (2,0) | EPH I | 393 | (2,0) | DISA 2 | 986 | (1,0) | SPH | 2947 | 76 |
| | 1000 | (2,0) | EPH II | | | | 168 | (1,0) | INS | | |

(1) Molekulargewicht berechnet

(2) Aminzahl mg KOH/g

Tabelle 3

| Bindemittelkombination (BK) | Teile Festsubstanz | | Katalysator | Neutalisation |
|---|---|---|---|---|
| | Bindemittel (ex Beispiel)* | Vernetzungsmittel | | |
| 1 | 100( 1)/65 EP | -- | 1,0 Sn | 40 |
| 2 | 70( 2)/60 EP | 30 H 1 | 1,0 Sn | 35 |
| 3 | 75( 3)/70 MP | 25 H 2 | 1,2 Pb | 40 |
| 4 | 70( 4)/65 MP | 30 H 1 | 0,8 Sn | 35 |
| 5 | 100( 5)/60 MP | 20 H 1 | 1,0 Sn | 30 |
| 6 | 80( 6)/65 MP | 20 H 1 | 1,0 Sn | 35 |
| 7 | 70( 7)/60 EP | 30 H 2 | 0,8 Pb | 40 |
| 8 | 80( 8)/65 MP | 20 H 1 | 1,0 Sn | 45 |
| 9 | 75( 9)/60 EP | 25 H 1 | 1,0 Sn | 30 |
| 10 | 100(10)/60 MP | -- | 0,6 Sn | 35 |

* Die Angaben beziehen sich auf die Prozentigkeit und das Lösungsmittel, in welchem das Bindemittel vorliegt.

Tabelle 4

| Lack aus BK | Schichtstärke* µm | Salzsprühtest Unterwanderung nach $360^h$ (mm) |
|---|---|---|
| 1 | 35 | 2 |
| 2 | 32 | 3 |
| 3 | 43 | 2,5 |
| 4 | 29 | 1 |
| 5 | 31 | 1 |
| 6 | 32 | 1 |
| 7 | 35 | 2 |
| 8 | 40 | 3 |
| 9 | 30 | 1 |
| 10 | 28 | 1,5 |
| V | 24 | 6,5 |

* Maximal erzielbare Schichtstärke bei 32°C Badtemperatur und 135 Sekunden Beschichtungsdauer.

## Patentansprüche

1. Verfahren zur Herstellung von nach vollständiger oder teilweiser Neutralisation mit anorganischen und/oder organischen Säuren wasserverdünnbaren Bindemitteln auf der Basis von aminmodifizierten Epoxidharzen, dadurch gekennzeichnet, daß man 5 bis 60 Mol%, vorzugsweise 10 bis 35 Mol %, der Epoxidgruppen einer harzartigen Verbindung mit mindestens zwei 1,2-Epoxidgruppen pro Molekül mit einem disekundären Diamin der allgemeinen Formel

(I)

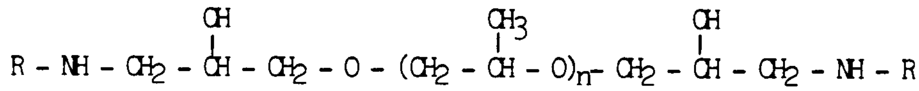

und/oder

(II)

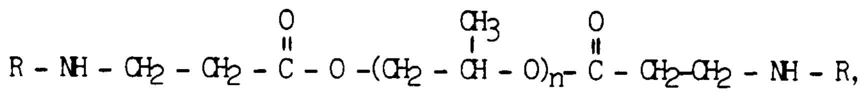

wobei R eine Alkylgruppe von 4 bis 18 C-Atomen oder eine Monohydroxyalkylgruppe oder eine Dihydroxyalkylgruppe oder eine tert.-Aminoalkylgruppe bedeutet und n für eine Zahl zwischen 2 und 12 steht,
und den Rest der Epoxidgruppen in bekannter Weise mit Aminen und/oder Carbonsäuren und/oder substituierten Phenolen bei 60 bis 120 °C vollständig umsetzt, wobei die Menge der basischen Komponenten so gewählt wird, daß das Endprodukt eine theoretische Aminzahl von mindestens 30 mg KOH/g, vorzugsweise von 50 bis 110 mg KOH/g, aufweist.

2. Verfahren nach Anspruch 1, dadurch gekennzeichnet, daß man als disekundäres Diamin der Formel (I) Umsetzungsprodukte aus 1 Mol eines Polypropylenglykoldiglycidylethers mit einem Molekulargewicht zwischen 200 und 800 mit 2 Mol einer eine primäre Aminogruppe aufweisenden Verbindung einsetzt.

3. Verfahren nach Anspruch 1, dadurch gekennzeichnet, daß man als disekundäres Diamin der Formel (II) Umsetzungsprodukte aus 1 Mol eines Dipropylenglykoldiacrylates und/oder Polypropylenglykoldiacrylats mit 2 Mol einer eine primäre Aminogruppe aufweisenden Verbindung einsetzt.

4. Verfahren nach den Ansprüchen 2 und 3, dadurch gekennzeichnet, daß man als eine primäre Aminogruppe aufweisende Verbindungen primäre Monoalkylamine und/oder primäre Alkanolmonoamine mit einer oder zwei Hydroxylgruppe(n) und/oder primär-tertiäre Alkyldiamine einsetzt.

5. Verfahren nach Anspruch 2, dadurch gekennzeichnet, daß man zur Verringerung des Gehalts an hydrolysierbarem Chlor die disekundären Diamine der Formel (I) sofort nach ihrer Herstellung einem Waschprozeß unterwirft.

6. Verwendung der nach den Ansprüchen 1 bis 5 hergestellten Bindemittel zur Formulierung von Elektrotauchlacken, mit welchen auch unter normalen Abscheidungsbedingungen Filme mit höherer Schichtstärke erreicht werden können.

## Claims

1. Process for the preparation of binders which are based on amine-modified epoxy resins and are water-dilutable after complete or partial neutralization with inorganic and/or organic acids, characterized in that 5 to 60 mol%, preferably 10 to 35 mol%, of the epoxy groups of a resin-like compound having at least two 1,2-epoxy groups per molecule are reacted completely at 60 to 120 °C with a disecondary diamine of the general formula

(I)

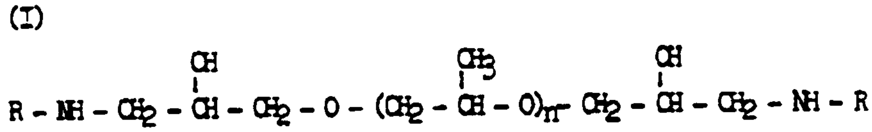

and/or

(II)

$$R-NH-CH_2-CH_2-\overset{\overset{O}{\|}}{C}-O-(CH_2-\overset{\overset{CH_3}{|}}{CH}-O)_n-\overset{\overset{O}{\|}}{C}-CH_2-CH_2-NH-R,$$

in which R denotes an alkyl group having 4 to 18 C atoms or a monohydroxyalkyl group or a dihydroxyalkyl group or a tert.-aminoalkyl group and n represents a number between 2 and 12, and the remainder of the epoxy groups are reacted completely at 60 to 120 °C in a known manner with amines and/or carboxylic acids and/or substituted phenols, the amount of the basic components being so chosen that the end product has a theoretical amine number of at least 30 mg of KOH/g, preferably 50 to 110 mg of KOH/g.

2. Process according to Claim 1, characterized in that reaction products of 1 mol of a polypropylene glycol diglycidyl ether having a molecular weight between 200 and 800 with 2 mol of a compound containing a primary amino group are employed as the disecondary diamine of the formula (I).

3. Process according to Claim 1, characterized in that reaction products of 1 mol of a dipropylene glycol diacrylate and/or polypropylene glycol diacrylate with 2 mol of a compound containing a primary amino group are employed as the disecondary diamine of the formula (II).

4. Process according to Claims 2 and 3, characterized in that primary monoalkylamines and/or primary alkanolmonoamines having one or two hydroxyl group(s) and/or primary-tertiary alkyldiamines are employed as compounds containing a primary amino group.

5. Process according to Claim 2, characterized in that the disecondary diamines of the formula (I) are subjected, immediately after they have been prepared, to a washing process in order to reduce the content of hydrolysable chlorine.

6. The use of the binders prepared in accordance with Claims 1 to 5 for formulating electrodeposition paints by means of which films having a greater layer thickness can be obtained even under normal deposition conditions.

## Revendications

1. Procédé de préparation de liants à base de résines époxydes modifiées par des amines, diluables à l'eau après neutralisation totale ou partielle avec des acides inorganiques et/ou organiques, caractérisé en ce que l'on fait réagir 5 à 60% molaire, de préférence 10 à 35% molaire des groupes époxy d'un composé résineux possédant au moins deux groupes époxy-1,2 par molécule avec une diamine disecondaire de formules générales

(I)

$$R-NH-CH_2-\overset{\overset{OH}{|}}{CH}-CH_2-O-(CH_2-\overset{\overset{CH_3}{|}}{CH}-O)_n-CH_2-\overset{\overset{OH}{|}}{CH}-CH_2-NH-R$$

et/ou

(II)

$$R-NH-CH_2-CH_2-\overset{\overset{O}{\|}}{C}-O-(CH_2-\overset{\overset{CH_3}{|}}{CH}-O)_n-\overset{\overset{O}{\|}}{C}-CH_2-CH_2-NH-R,$$

dans lesquelles R signifie un groupe alkyle de 4 à 18 atomes de C, un groupe monohydroxyalkyle, un groupe dihydroxyalkyle ou un groupe tert.-aminoalkyle et n représente un nombre compris entre 2 et 12, et que l'on fait réagir totalement, de façon connue, le reste des groupes époxy avec des amines et/ou des acides carboxyliques et/ou des phénols substitués à une température de 60 à 120 °C, la quantité des composants basiques étant choisie de manière que le produit final présente un indice d'amine théorique d'au moins 30 mg de KOH/g, de préférence de 50 à 110 mg de KOH/g.

**2.** Procédé selon la revendication 1, caractérisé en ce qu'on met en oeuvre, en tant que diamine disecondaire de formule (I), des produits de réaction de 1 mole d'un éther diglycidique de polypropylèneglycol ayant un poids moléculaire entre 200 et 800 avec 2 moles d'un composé comportant un groupe amino primaire.

**3.** Procédé selon la revendication 1, caractérisé en ce qu'on met en oeuvre, en tant que diamine disecondaire de formule (II), des produits de réaction de 1 mole d'un diacrylate de dipropylènegycol et/ou d'un diacrylate de polypropylèneglycol avec 2 moles d'un composé comportant un groupe amino primaire.

**4.** Procédé selon les revendications 2 et 3, caractérisé en ce qu'on met en oeuvre, en tant que composés comportant un groupe amino primaire, des monoalkylamines primaires et/ou des alcanolmonoamines primaires avec un ou deux groupes hydroxyles et/ou des alkyldiamines primaires-tertiaires.

**5.** Procédé selon la revendication 2, caractérisé en ce que, pour la réduction de la teneur en chlore hydroysable, on soumet les diamines disecondaires de formule (I) à une opération de lavage aussitôt après leur préparation.

**6.** Utilisation des liants préparés selon les revendications 1 à 5 pour la formulation de peintures électrophorétiques avec lesquelles peuvent être obtenus également, dans des conditions de dépôt normales, des films avec une épaisseur de couche plus forte.